# EUROPEAN PATENT APPLICATION

(11) **EP 4 815 178 A1**
(43) Date of publication of application: **30.09.2026**
(21) Application number: 26168771.9
(22) Date of filing: 27.03.2026
(51) Int. Cl.: H01M 50/553, H01M 50/15, H01M 50/55, H01M 50/147, H01M 50/188, H01M 50/567

(54) **CAP ASSEMBLY FOR SECONDARY BATTERY AND SECONDARY BATTERY COMPRISING THE SAME**

(30) Priority: 27.03.2025 KR 20250039355; 20.06.2025 KR 20250082000; 20.10.2025 KR 20250151894
(71) Applicant: SK On Co., Ltd., Seoul 03161 (KR)
(72) Inventor: KWAK, Seung Ho, 34124 Daejeon (KR); PARK, Seong Che, 34124 Daejeon (KR)
(74) Representative: Stolmár & Partner Patentanwälte PartG mbB

(57) **Abstract**

The present disclosure relates to a cap assembly for a secondary battery, including: a cap plate provided with one or more openings; and one or more terminal members inserted into the opening and exposed through one surface of the cap plate, wherein the terminal member includes a terminal, a bracket, and an insulating member and is integrally formed by insert molding. Moreover, the disclosure relates to a secondary battery comprising: an electrode assembly having one or more tabs; a current collector connected with the tab of the electrode assembly; a cap assembly including a terminal member connected with the current collector; and a case housing the electrode assembly and including an open surface, wherein the cap assembly is configured to cover the open surface of the case, and wherein the terminal member includes a terminal, a bracket, and an insulating member and is integrally formed by insert molding.

## Description

### BACKGROUND OF THE INVENTION

### 1. Field

The present disclosure relates to a cap assembly for a secondary battery and a secondary battery including the same.

### 2. Description of the Related Art

Unlike primary batteries, secondary batteries are rechargeable, and their demand is steadily increasing owing to their potential for miniaturization and high capacity. These secondary batteries are manufactured in the form of a single battery cell packed in a pack or a battery pack connected with dozens of battery cells, and are widely used as a power source for cell phones, laptops, and electric vehicles to drive motors.

The secondary battery includes a case open at one side, a cap assembly covering one side of the case, and an electrode assembly inserted into the case. The electrode assembly includes a positive electrode and a negative electrode, and electrical energy is generated by an electrochemical reaction between the positive electrode and the negative electrode. The positive electrode and negative electrode are electrically connected to the case or cap assembly, wherein the cap assembly is assembled in various structures such as terminals, insulators, and the like that are connected to the positive electrode or negative electrode and exposed to the outside. Various studies have been conducted to improve productivity and process efficiency while preventing electrical short circuits from occurring in such cap assemblies.

### SUMMARY OF THE INVENTION

An embodiment of the present disclosure may provide a cap assembly for a secondary battery with improved assembly and productivity, and a secondary battery including the same.

Further, an embodiment of the present disclosure may provide a cap assembly for a secondary battery that has a simple structure with improved electrical characteristics, and a secondary battery including the same.

The present disclosure may be widely applied in the field of electric vehicles, battery charging stations, energy storage systems (ESS), and other green technologies such as photovoltaics and wind power utilizing batteries. The present disclosure may also be used in eco-friendly mobility including electric vehicles and hybrid vehicles to prevent climate change by reducing air pollution and greenhouse gas emissions.

An embodiment of the present disclosure includes a cap assembly for a secondary battery and a secondary battery including the same.

In an embodiment, the cap assembly for a secondary battery may include: a cap plate provided with one or more openings; and one or more terminal members inserted into the opening and exposed through a first surface of the cap plate, wherein the terminal member may include a terminal, a bracket, and an insulating member and may be integrally formed by insert molding.

In an embodiment, the terminal member may have any one or more of a circular and an elliptical cross-section.

In an embodiment, the terminal may have a cylindrical shape, wherein the bracket may have a hollow cylindrical shape with a passage formed therein, and wherein the insulating member may be interposed between the terminal and the bracket.

In an embodiment, a first surface of the terminal member may be configured to be exposed to the first surface of the cap plate, wherein the first surface of the terminal member may be provided with the terminal and the insulating member, and a second surface of the terminal member may be provided with the terminal, the bracket, and the insulating member, and wherein the insulating member may include one or more grooves, and the grooves may be provided on the first surface of the terminal member.

In an embodiment, the insulating member may include an inwardly recessed seating portion along an edge of the insulating member, wherein at least a portion of the bracket may be inserted into the seating portion.

In an embodiment, any one or more of an outer surface of the terminal and an inner circumferential surface of the bracket may include surface irregularities.

In an embodiment, any one or more of the outer surface of the terminal and the inner circumferential surface of the bracket may include screw threads.

In an embodiment, the terminal may be provided in a cylindrical shape having a first height, wherein the bracket may be provided in a hollow cylindrical shape having a passage formed therein with a second height less than the first height, wherein the insulating member may include: an inner support provided between an outer surface of the terminal and an inner surface of the bracket; an outer support covering at least a portion of the outer surface of the bracket; and an extension connecting the inner support and a first end of the outer support, and wherein at least a portion of the bracket may be inserted into a space formed by the inner support, the outer support, and the extension.

In an embodiment, the inner support may have a third height, and the outer support may have a fourth height less than the third height, wherein the fourth height of the outer support may be less than the second height of the bracket, and wherein the inner surface of the bracket is configured to be in full contact with the inner support of the insulating member, whereas the outer surface of the bracket may include an exposed surface that is in contact with the outer support of the insulating member with at least a portion exposed.

In an embodiment, the exposed surface of the bracket may be welded with the cap plate, and a second end of the outer support of the insulating member may be seated on the first surface of the cap plate.

In an embodiment, the inner support, the outer support, and the extension may have ∩-shape longitudinal sections, and the second end of the outer support may further include a friction surface.

In an embodiment, the cap assembly may further include: a vent member provided on the cap plate; one or more current collectors connected with the terminal member on a second surface of the cap plate; and an insulating sheet interposed between the current collector and the cap plate, wherein the cap plate may further include a vent hole in which the vent member is provided, and wherein the first surface of the terminal member may be exposed through the first surface of the cap plate, and the second surface of the terminal member may be connected with the current collector.

In an embodiment, at least some of the terminal and the bracket may further include a functional layer.

In an embodiment, the functional layer may be provided by surface treating at least one or more of the terminal and the bracket prior to insert molding, wherein the functional layer may include at least one or more of: one or more functional groups; and one or more nanopores.

In an embodiment, the functional group may include at least one or more of a hydroxyl group (-OH), an amine group (-NH₂), and an epoxy group (-C-O-C-).

In an embodiment, a secondary battery may include: an electrode assembly having one or more tabs; a current collector connected with the tab of the electrode assembly; a cap assembly including a terminal member connected with the current collector; and a case housing the electrode assembly and including an open surface, wherein the cap assembly may be configured to cover the open surface of the case, and wherein the terminal member may include a terminal, a bracket, and an insulating member and may be integrally formed by insert molding.

In an embodiment, the terminal may be provided in a cylindrical shape having a first height, wherein the bracket may be provided in a hollow cylindrical shape having a passage formed therein with a second height less than the first height, wherein the insulating member may include: an inner support provided between an outer surface of the terminal and an inner surface of the bracket; an outer support covering at least a portion of an outer surface of the bracket; and an extension connecting the inner support and a first end of the outer support, and wherein at least a portion of the bracket may be inserted into a space formed by the inner support, the outer support, and the extension.

In an embodiment, the inner support may have a third height, and the outer support may have a fourth height less than the third height, wherein the fourth height of the outer support may be less than the second height of the bracket, wherein the inner surface of the bracket may be configured to be in full contact with the inner support of the insulating member, whereas the outer surface of the bracket may include an exposed surface that is in contact with the outer support of the insulating member with at least a portion exposed, and wherein the exposed surface of the bracket may be welded with the cap plate, and a second end of the outer support of the insulating member may be seated on a first surface of the cap plate.

According to an embodiment of the present disclosure, a cap assembly for a secondary battery with improved assembly and productivity, and a secondary battery including the same may be provided.

Furthermore, according to an embodiment of the present disclosure, a cap assembly for a secondary battery with a simple structure and improved electrical characteristics, and a secondary battery including the same may be provided.

### BRIEF DESCRIPTION OF THE DRAWINGS

Fig. 1 is an exploded view of a cap assembly according to an embodiment of the present disclosure.
Fig. 2 is an exploded view of Fig. 1.
Fig. 3 is a diagram illustrating a top view of Fig. 1.
Fig. 4 is a diagram illustrating the terminal member of Fig. 1.
Fig. 5 is a cross-sectional view along A-A of Fig. 3.
Fig. 6 is a diagram illustrating the insulating member of Fig. 5.
Fig. 7 is a diagram schematically illustrating a process of manufacturing a cap assembly according to an embodiment of the present disclosure.
Fig. 8 is a perspective view of a cap assembly according to another embodiment of the present disclosure.
Fig. 9 is a diagram illustrating an insulating member according to another embodiment of the present disclosure.
Fig. 10 is a diagram schematically illustrating a terminal member according to another embodiment of the present disclosure.
Fig. 11 is a cross-section along B-B of Fig. 10.
Fig. 12 is a diagram illustrating a secondary battery according to another embodiment of the present disclosure.
Fig. 13 is an exploded view of Fig. 12.

### DETAILED DESCRIPTION

The structural or functional descriptions of the embodiments disclosed in this specification or application are illustrated for the purpose of describing embodiments in accordance with the technical ideas of the present disclosure only, and embodiments in accordance with the technical ideas of the present disclosure may be practiced in various forms other than those disclosed in this specification or application, and the technical ideas of the present disclosure shall not be construed to be limited to the embodiments described in this specification or application.

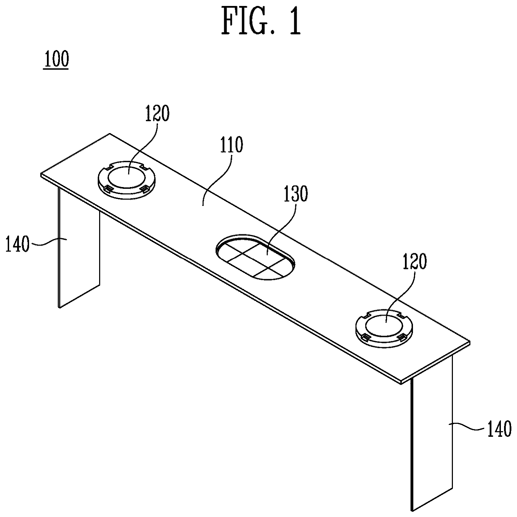

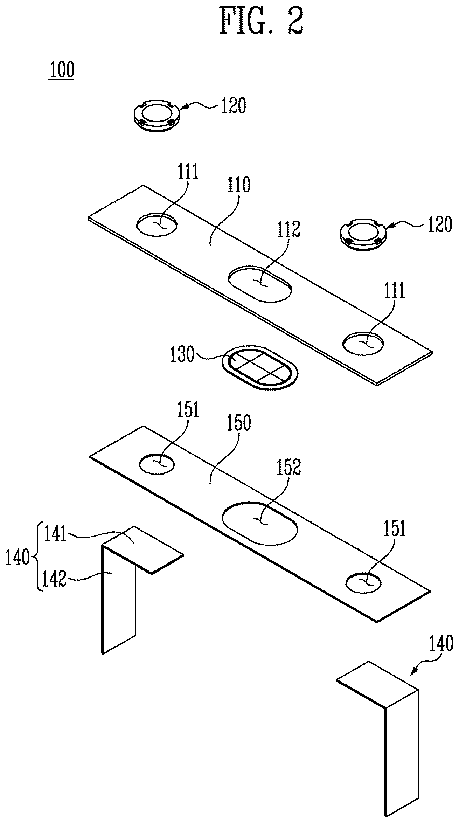

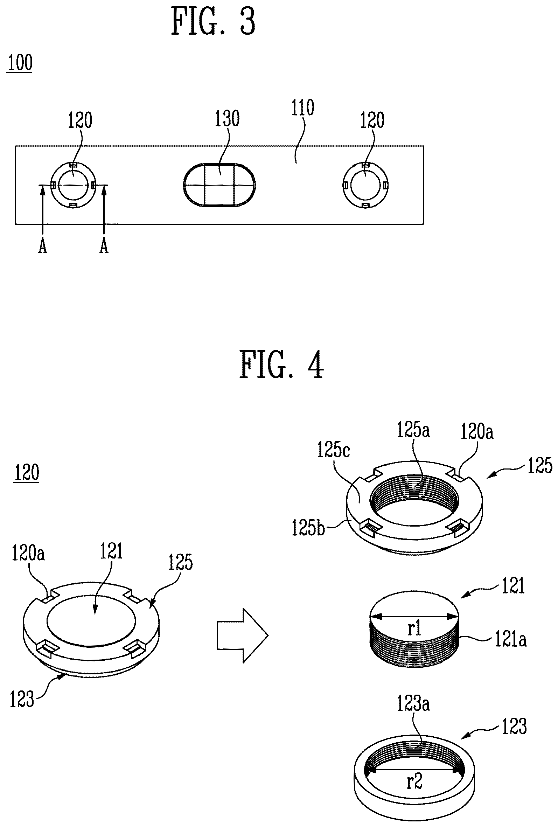

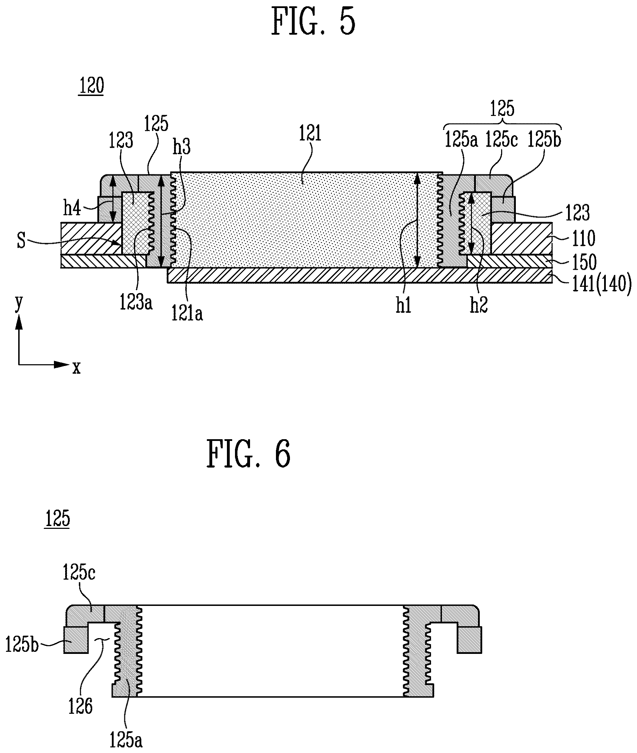

Fig. 1 is a perspective view of a cap assembly according to an embodiment of the present disclosure. Fig. 2 is an exploded view of Fig. 1. Fig. 3 is a diagram illustrating a top view of Fig. 1. Fig. 4 is a diagram illustrating the terminal member of Fig. 1. Fig. 5 is a cross-sectional view along A-A of Fig. 3. Fig. 6 is a diagram illustrating the insulating member of Fig. 5.

Referring to Figs. 1 to 4, a cap assembly 100 for a secondary battery according to an embodiment of the present disclosure may include: a cap plate 110 having one or more openings 111; and one or more terminal members 120 inserted into the openings 111 and exposed through a first surface of the cap plate 110. The terminal member 120 may include a terminal 121, a bracket 123 and an insulating member 125, which may be integrally formed by insert molding.

The secondary battery may include: a case having one or more open surfaces; a cap assembly 100 covering the open surfaces of the case; and an electrode assembly and electrolyte housed within the case.

The electrode assembly may include a positive electrode, a negative electrode, and a separator provided between the positive electrode and negative electrode. The electrode assembly may be housed in the case with an electrolyte having ionic conductivity, and the positive electrode and the negative electrode may be electrically connected to a terminal member 120 of the cap assembly 100 via a current collector or the like. The terminal member 120 may be exposed to the outside of the secondary battery and may function as a positive electrode terminal and a negative electrode terminal.

Alternatively, the separator may be omitted from the electrode assembly, in the case that a solid electrolyte or polymer gel electrolyte is utilized. The electrode assembly may include a positive electrode and a negative electrode, and the solid electrolyte or polymer gel electrolyte may be provided between the positive electrode and the negative electrode.

In general, the cap assembly for a secondary battery has positive and negative electrode terminals in the form in which an outer terminal in the form of a plate, an inner terminal in the form of a rivet, and one or more gaskets are used individually to be assembled. Specifically, the inner terminal in the form of a rivet is connected to a current collector connected to the positive electrode or the negative electrode and is inserted into the outer terminal from the inside of the case and fixed by deformation with application of an external force. In this case, the inner and outer terminals were connected in such a way that the outer terminal is provided on the outer surface of the cap plate and the inner terminal is provided on the inner surface of the cap plate, respectively; however, there was a problem in that numerous defects occurred during this process, with low productivity due to an increase in the number of individual parts. In addition, it was necessary to manage the technical proficiency of operators and defects frequently occurred in the sealing by assembly tolerances.

In contrast, the cap assembly 100 for a secondary battery according to the embodiment of the present disclosure may be provided with a novel structure, which reduces the number of parts constituting the cap assembly 100 and simplifies the assembly method, thereby improving productivity and process efficiency. Furthermore, the cap assembly 100 for a secondary battery according to an embodiment of the present disclosure may improve sealing performance by blocking and/or reducing leak paths between the parts constituting the cap assembly 100, which in turn may improve the electrochemical properties of the secondary battery.

The cap plate 110 may be provided in a shape to correspond to an open surface of the case. When the case is cylindrical, the cap plate 110 may be circular. When the case is square, the cap plate 110 may be square. When the case has one or more open surfaces, the cap plate 110 may be provided in accordance with the number of open surfaces of the case. For example, when the case has open surfaces at both sides, two cap plates 110 may be provided. In the present disclosure, the case is shown as having a square shape with a single open surface, but is not limited thereto.

The cap plate 110 may be provided with one or more openings 111, and at least a portion of the terminal member 120 may be exposed to the outside through the openings 111. Specifically, the cap plate 110 may be provided with openings 111 on each of a first side and a second side of the cap plate 110, and the terminal member 120 may be provided in the openings 111 to function as positive and negative electrode terminals, respectively.

The cap assembly 100 for a secondary battery may further include: a vent member 130 provided on the cap plate 110; one or more current collectors 140 connected with the terminal members 120 on the second surface of the cap plate 110; and an insulating sheet 150 interposed between the current collectors 140 and the cap plate 110.

The cap plate 110 may further include a vent hole 112 in which the vent member 130 is provided, wherein the vent hole 112 in the cap plate 110 may be provided at a center. The vent member 130 may be made of metal and may include a portion with relatively low strength that is susceptible to breakage by external forces. The vent member 130 may be broken when the pressure in the case is above a predetermined level to form an intentional leak, thereby preventing the secondary battery from igniting, exploding, or the like.

The current collector 140 may be made of an electrically connectable material. The current collector 140 may function as a passage for transmitting the current formed in the electrode assembly to the outside. The current collector 140 may include a first current connector 141 in connection with the terminal member 120 and a second current connector 142 in connection with a positive electrode or a negative electrode of the electrode assembly.

In the present disclosure, the first current connector 141 and the second current connector 142 may be connected vertically. Specifically, the current collector 140 may have a " 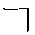 "-shaped longitudinal section. The connection form of the first and second current connections 141, 142 in the current collector 140 may be variously provided, but is not limited thereto.

The insulating sheet 150 may be provided on a second surface of the cap plate 110. The insulating sheet 150 may be made of an insulating material and may be provided in a shape corresponding to the cap plate 110. When the cap plate 110 is provided in a rectangular shape, the insulating sheet 150 may be provided in a rectangular shape. By insulating the cap plate 110, the insulating sheet 150 may prevent the cap plate 110 from generating an electrical short circuit or the like with an electrode assembly provided inside the case.

The insulating sheet 150 may include a first hole 151 and a second hole 152. The first hole 151 may be provided in a position corresponding to an opening 111 of the cap plate 110, and the second hole 152 may be provided in a position corresponding to the vent hole 112 of the cap plate 110.

The terminal member 120 may have a first surface exposed through a first surface of the cap plate 110, and the second surface of the terminal member 120 may be connected to the current collector 140. Specifically, the terminal member 120 may be inserted into the opening 111 on the first surface of the cap plate 110 and may be electrically connected to the current collector 140 through a first hole 151 of the insulating sheet 150. Specifically, the terminal member 120 may be directly connected to the current collector 140 without adding a separate connection element or the like.

The first hole 151 may have an area less than the widest area of the cross-section of the terminal member 120. Furthermore, the first hole 151 may have an area less than that of the opening 111. Specifically, when the terminal member 120 is inserted to penetrate through the opening 111, only the terminal 121 and the insulating member 125 of the terminal member 120 may pass through the first hole 151. More specifically, only the terminal 121 and insulating member 125 of the terminal member 120 are inserted, and the bracket 123 may be provided to be seated on a surface of the insulating sheet 150.

Furthermore, the vent member 130 provided in the vent hole 112 may be exposed through the second hole 152, which may be sensitive to the internal pressure of the case.

The terminal member 120 may have any one or more of a circular and an elliptical cross-section. As the terminal member 120 has any one or more of a circular and an elliptical cross-section, it is possible to facilitate assembly of the cap assembly 100 for a secondary battery.

Referring to Fig. 4, the terminal 121 may be cylindrical in shape, the bracket 123 may be hollow cylindrical in shape with a passage formed therein, and the insulating member 125 may be interposed between the terminal 121 and the bracket 123.

The terminal 121 may be provided in the cap plate 110 to function as a positive electrode terminal or a negative electrode terminal. The bracket 123 may reinforce the rigidity of the terminal 121 and allow the terminal 121 to be fixed to the cap plate 110.

The terminal 121 may be electrically connected to the current collector 140, and the bracket 123 may be fixed to the cap plate 110. the terminal 121 and the bracket 123 may be made of an electrically conductive material, such as metal, but an insulating member 125 may be interposed between the terminal 121 and the bracket 123 to prevent electrical conduction between the terminal 121 and the bracket 123. Specifically, the terminal 121 may be electrically connected to the electrode assembly via a current collector 140, and the bracket 123 may be connected to the cap plate 110.

The insulating member 125 may be provided between the terminal 121 and the bracket 123, and an insulating sheet 150 may be provided between the bracket 123 and the current collector 140, so that the terminal 121 is electrically disconnected from the cap plate 110, and the bracket 123 may be electrically disconnected from the current collector 140. In the cap assembly 100 for a secondary battery according to an embodiment of the present disclosure, the terminal member 120 may be rigidly fixed to the cap plate 110 of the cap assembly 100 via the bracket 123, but may be insulated for the cap plate 110.

Any one or more of the outer surface 121a of the terminal 121 and the inner circumferential surface 123a of the bracket 123 may have surface irregularities. By including surface irregularities on at least any one or more of the outer surface 121a of the terminal 121 and the inner circumferential surface 123a of the bracket 123, the surface area of the terminal 121 and the bracket 123 may be increased, thereby increasing the contact area with the insulating member 125. Furthermore, the terminal 121 and the bracket 123 may be made of metal, and the insulating member 125 may be made of polymer resin or the like, and the surface irregularities provided on at least any one of the outer surface 121a of the terminal 121 and the inner circumferential surface 123a of the bracket 123 may provide a friction force with the insulating member 125, thereby increasing the binding force of the terminal member 120.

Any one or more of the outer surface 121a of the terminal 121 and the inner circumferential surface 123a of the bracket 123 may include screw threads. Specifically, on a surface where the outer surface 121a of the terminal 121 and the inner circumferential surface 123a of the bracket 123 face each other may be provided with screw threads.

The terminal member 120 may be provided by insert molding. Specifically, by seating the terminal 121 and the bracket 123 in a mold for insert molding and then injecting a polymer resin or the like, the terminal 121, the bracket 123, and the insulating member 125 may be integrated. In this case, the bonding force between the outer surface 121a of the terminal 121 and the insulating member 125 and between the inner circumferential surface 123a of the bracket 123 and the insulating member 125 may be improved, thereby exhibiting high airtightness.

The insulating member 125 may include a crystalline resin of a polymer resin. As the insulating member 125 includes a crystalline resin, it is possible to improve the strength of the terminal member 120 and further enhance the binding force of the terminal 121 and bracket 123.

The crystalline resin may include any one or more selected from the group consisting of polyphenylene sulfide (PPS), polybutylene terephthalate (PBT), polyether ether ketone (PEEK), polyamide (PA), polyethylene terephthalate (PET), polyoxymethylene (POM), polypropylene (PP), polyethylene (PE), polyimide (PI), and maleic anhydride grafted polypropylene (PP-g-MA).

The insulating member 125 may be utilized by introducing functional groups in the polymer resin.

Furthermore, the insulating member 125 may be used by mixing fillers into the polymer resin to increase strength. The filler may include any one or more of glass fiber, carbon fiber, and aramid fiber.

The terminal 121 may have a circular cross-section, but may have an average diameter of a first diameter r1. The bracket 123 may have a donut-shaped cross-section, but may have a mean inner diameter of a second diameter r2. The first diameter r1 may be from 5 mm to 50 mm. When the first diameter r1 is less than 5 mm, there is a problem due to high resistance in electrical connection with an external device, and when it is greater than 50 mm, an electrical short circuit may occur in the process of manufacturing the cap assembly 100 or interference with the vent may occur.

The second diameter r2 may be 1 mm to 10 mm greater than the first diameter r1. When the difference r2-r1 between the second diameter r2 and the first diameter r1 is less than 1 mm, insulation by the insulating member 125 may deteriorate, and a number of defects may occur in insert molding process of manufacturing the terminal member 120. Furthermore, when the difference r2-r1 between the second diameter r2 and the first diameter r1 is greater than 10 mm, injection shrinkage or the like may occur, and the bonding force between the insulating member 125, the terminal 121, and the bracket 123 may deteriorate.

Referring to Figs. 5 and 6, a first surface of the terminal member 120 according to an embodiment of the present disclosure may be configured to be exposed to a first surface of the cap plate 110, and a second surface of the terminal member 120 may be configured to correspond to a second surface of the cap plate 110. In the terminal member 120, the insulating member 125 may be interposed between the terminal 121 and the bracket 123, and may be configured to cover at least a portion of the bracket 123 at the same time. Specifically, the bracket 123 may not be exposed on the first surface of the terminal member 120, but only on the second surface of the terminal member 120. More specifically, the first surface of the terminal member 120 may be provided with the terminal 121 and the insulating member 125, and the second surface of the terminal member 120 may be provided with the terminal 121, bracket 123, and insulating member 125.

The insulating member 125 may include one or more grooves 120a (see Fig. 4), wherein the grooves 120a may be provided on the first surface of the terminal member 120. A plurality of grooves 120a may be provided. The terminal member 120 according to the present embodiment may be provided by insert molding. The groove 120a of the insulating member 125 may be provided for separating the terminal member 120 from the mold for insert molding during insert molding. Specifically, the grooves 120a may be provided along a circular edge of the insulating member 125, and may be provided in four pieces. By having four grooves 120a, the terminal member 120 may be efficiently separated from the mold for insert molding, and the appearance of the insulating member 125 may be prevented from being damaged in the terminal member 120.

The insulating member 125 may include an inwardly recessed seating portion 126 along an edge of the insulating member 125, and at least a portion of the bracket 123 may be inserted into the seating portion 126. By inserting the bracket 123 into the seating portion 126, only the terminal 121 and the insulating member 125 are exposed to the outside on the first surface of the terminal member 120, so that the terminal member 120 may be reliably utilized as desired positive or negative electrode terminals without generating an electrical short circuit or the like.

The terminal 121 may be provided in a cylindrical shape having a first height h1, and the bracket 123 may be provided in a hollow cylinder with a passage formed therein having a second height h2 less than the first height h1.

The insulating member 125 may include an inner support 125a provided between the outer surface of the terminal 121 and the inner surface of the bracket 123; an outer support 125b covering at least a portion of the outer surface of the bracket 123; and an extension 125c connecting the inner support 125a and an end of the outer support 125b, wherein at least a portion of the bracket 123 may be inserted within the space formed by the inner support 125a, the outer support 125b, and the extension 125c. The space formed by the inner support 125a, the outer support 125b, and the extension 125c may be a seating portion 126.

The inner support 125a may have a third height h3, and the outer support 125b may have a fourth height h4 that is less than the third height h3. The fourth height h4 of the outer support 125b may be less than the second height h2 of the bracket.

The inner surface of the bracket 123 may come in full contact with the inner support 125a of the insulating member 125, while the outer surface of the bracket 123 may include an exposed surface S that is in contact with the outer support 125b of the insulating member 125 with at least a portion exposed. The exposed surface S of the bracket 123 may be welded with the cap plate 110, and a second end of the outer support 125b of the insulating member 125 may be seated on a first surface of the cap plate 110.

The terminal member 120 may be inserted into the opening 111 of the cap plate 110 and fixed to the cap plate 110 by laser welding or the like. Specifically, the exposed surface S exposed outwardly of the insulating member 125 on the bracket 123 of the terminal member 120 may be connected with the opening 111 of the cap plate 110 by laser welding or the like.

A leak path through which air or the like may be discharged from the terminal member 120 provided in the cap assembly 100 for a secondary battery may include a first path between the terminal 121 and the insulating member 125, a second path between the bracket 123 and the insulating member 125, and a third path where the cap plate 110 and the bracket 123 are welded. In this case, airtightness of the first and second paths may be retained by surface bonding of the insulating member 125 made of a polymer resin or the like with the terminal 121 and the bracket 123 made of metal.

In the cap assembly 100 for a secondary battery according to an embodiment of the present disclosure, the outer surface of the terminal 121 and the inner surface of the bracket 123 may each be provided with surface irregularities such as screw threads or the like. The surface irregularities provided on the outer surface of the terminal 121 and the outer surface of the bracket 123 may increase the surface area on which the terminal 121 and the bracket 123 are in contact with the insulating member 125, thereby improving airtightness.

Further, the surface irregularities provided on the outer surface of the terminal 121 and the inner surface of the bracket 123, respectively, may include screw threads. Since the screw threads are formed in a transverse direction, they may be formed perpendicular to the leak path to increase the length of the first and second paths, thereby further improving the airtightness of the first and second paths.

Regarding the third path, the second end of the outer support 125b of the insulating member 125 may come in contact with the first surface of the cap plate 110, which may effectively prevent leakage through the third path.

In the cap assembly 100 according to an embodiment of the present disclosure, the terminal member 120 is provided with a circular cross-section, which may facilitate assembly. Furthermore, by not having a form of connection by assembling and pressurizing rivets or the like, quality variations caused by assembly tolerances may be prevented. Furthermore, the cap assembly 100 according to an embodiment of the present disclosure utilizes an integrated terminal member 120, which may improve productivity and process efficiency.

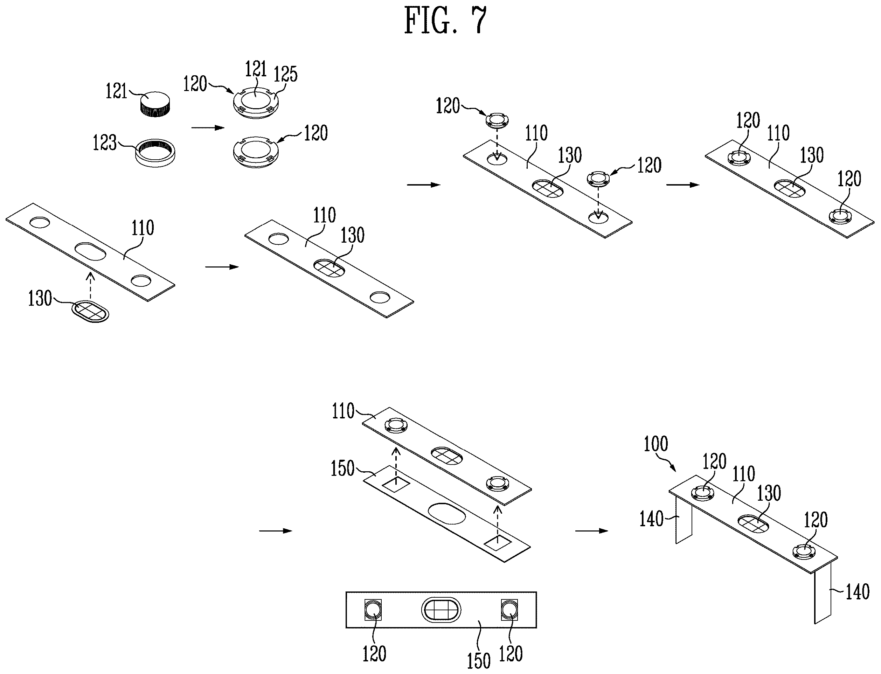

Hereinafter, another embodiment of the present disclosure will be described with reference to Figs. 7 to 11. In the following embodiments, configurations that overlap with those described in Figs. 1 to 6 above will be omitted in the description.

Fig. 7 is a diagram schematically illustrating a process of manufacturing a cap assembly according to an embodiment of the present disclosure.

Referring to Fig. 7, a cap assembly 100 according to an embodiment of the present disclosure may be manufactured in the following sequence.

A terminal 121 having a cylindrical shape and a bracket 123 having a donut shape may be prepared, respectively, and at least one or more surface irregularities may be formed an outer surface of the terminal 121 and an inner surface of the bracket 123. The surface irregularities may include screw threads, and may be provided on both the outer surface of the terminal 121 and the inner surface of the bracket 123 so that the screw threads provided on the terminal 121 and the bracket 123, respectively, face each other.

Using a mold for insert molding, a terminal member 120 may be formed including the terminal 121 and bracket 123 integrated by an insulating member 125.

Additionally, in any one or more of the following steps: simultaneously with the terminal member 120; before the terminal member 120; and after the terminal member 120, the cap plate 110 and a vent member 130 may be prepared, and then the vent member 130 may be coupled to the vent hole of the cap plate 110.

The terminal member 120 may be provided in the opening of the cap plate 110 in which the vent member 130 is provided. In this case, the terminal member 120 may be fixed to the cap plate 110 by laser welding or the like.

An insulating sheet 150 may be provided at the bottom of the cap plate 110. The insulating sheet 150 may be provided with a first hole and a second hole, a lower surface of the terminal member 120 may be exposed through the first hole, and the vent member 130 may be exposed through the second hole.

The terminal member 120 may be connected with a current collector 140. The current collector 140 may be connected with a positive electrode and a negative electrode of the electrode assembly, respectively, and when connected with the positive electrode, the terminal member 120 may act as a positive electrode terminal, and when connected with the negative electrode, the terminal member 120 may act as a negative electrode terminal.

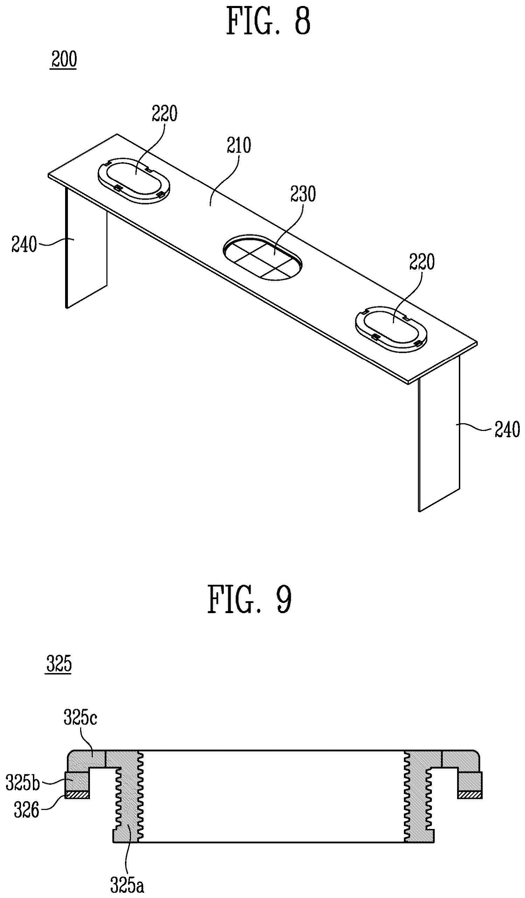

Fig. 8 is a perspective view of a cap assembly according to another embodiment of the present disclosure.

Referring to Fig. 8, a cap assembly 200 for a secondary battery according to an embodiment of the present disclosure may include a cap plate 210, one or more terminal members 220 provided on the cap plate 210, and a vent 230. Further, a first surface of the terminal member 220 may be exposed to a first surface of the cap plate 210, and a second surface of the terminal member 220 may be connected to a current collector 240.

The terminal member 220 may have any one or more of a circular and an elliptical cross-section. Specifically, the terminal member 220 may have an elliptical shape. When the cap plate 210 has a narrow width, the diameter of the terminal member 220 may be reduced. In this case, the terminal member 220 according to the present embodiment is provided in an elliptical shape, so that the diameter of the terminal member 220 with respect to the width direction of the cap plate 210 may be reduced, while the diameter of the terminal member 220 with respect to the length direction of the cap plate 210 may be increased, thereby increasing the surface area of the terminal member 220. By increasing the surface area of the terminal member 220, it is possible to facilitate welding of the terminal member 220 with a busbar as well as current flow.

Fig. 9 is a diagram illustrating an insulating member according to another embodiment of the present disclosure.

Referring to Fig. 9, the terminal member 220 according to an embodiment of the present disclosure may be provided with a terminal, a bracket, and an insulating member 325 by insert molding. The insulating member 325 may include an inner support 325a provided between the terminal and the bracket, an outer support 325b covering at least a portion of an outer surface of the bracket, and an extension 325c connecting the inner support 325a and the outer support 325b. In the insulating member 325, the inner support 325a, outer support 325b, and extension 325c may have ∩-shape longitudinal sections, and the second end of the outer support 325b may further include a friction surface 326.

The friction surface 326 may be formed by partially dosing a polymer resin having a high coefficient of friction into the mold during insert molding in the process of manufacturing the terminal member. Alternatively, the friction surface 326 may include surface irregularities formed by physically or chemically etching the second end of the outer support 325b after the terminal member has been manufactured by insert molding. The friction surface 326 may provide a relatively high friction force only on the second end of the outer support 325b, without changing the overall properties of the insulating member 325.

In the process of inserting the terminal member into the opening of the cap plate and assembling it, the second end of the outer support 325b may come into contact with a first surface of the cap plate. The insulating member 325 according to this embodiment may further include a friction surface 326 on the second end of the outer support 325b, and the friction surface 326 may improve the airtightness between the outer support 325b and the cap plate.

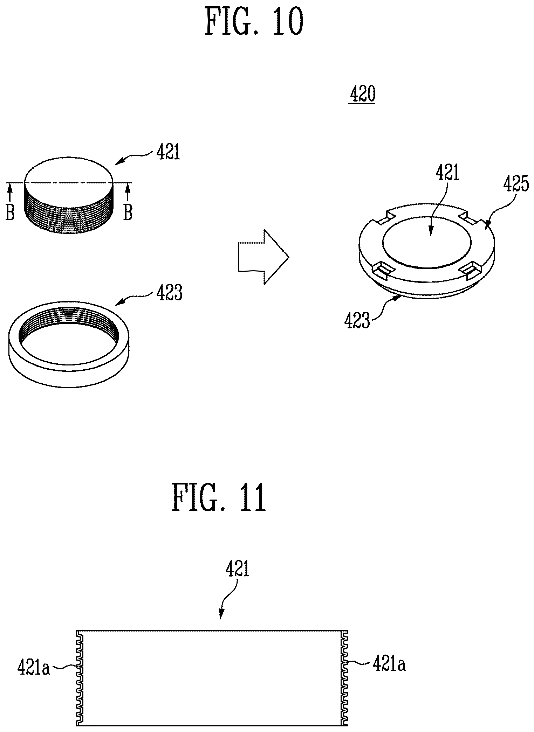

Fig. 10 is a diagram schematically illustrating a terminal member according to another embodiment of the present disclosure. Fig. 11 is a cross-sectional view along B-B of Fig. 10.

Referring to Figs. 10 and 11, a terminal member 420 according to an embodiment of the present disclosure may include a terminal 421, a bracket 423, and an insulating member 425 interposed between the terminal 421 and the bracket 423. The terminal member 420 may be manufactured by insert molding of the terminal 421 and the bracket 423, each of which is separately provided, and in the process of performing insert molding, the insulating member 425 may be provided using a polymer resin or the like.

The terminal member 420 according to an embodiment of the present disclosure may further include a functional layer 421a on at least some of the terminal 421 and the bracket 423.

The functional layer 421a may be provided on a surface of the terminal 421 or the bracket 423, or may be provided on both sides of the terminal 421 and the bracket 423. Furthermore, the functional layer 421a may be provided on a portion of the surface of the terminal 421 or the bracket 423, or may be provided on all over the surface of the terminal 421 or the bracket 423.

Hereinafter, the functional layer 421a is described as being provided on one side of the terminal 421, but is not limited thereto.

The functional layer 421a may be provided by surface treating at least one or more of the terminal 421 and the bracket prior to insert molding. The functional layer 421a may include at least one or more of: one or more functional groups; and one or more nanopores.

The terminal 421 or the bracket 423 may be made of metal or the like, and the insulating member 425 may be made of a polymer resin or the like, which are made of different materials so that the interfacial adhesion between them may be relatively low. On the other hand, the terminal member 420 according to an embodiment of the present disclosure may further include a functional layer 421a on the terminal 421 or the bracket 423, thereby improving the adhesion between the terminal 421, the insulating member 425, and the bracket 423, and further improving the airtightness of the terminal member 420.

The functional layer 421a may include at least one or more of: one or more functional groups; and one or more nanopores. The functional layer 421a may be prepared by surface treatment, such as a surface functionalization process using chemicals or the like, or a surface etching process.

The one or more functional groups may be chemically bonded to the surface of the terminal 421 or the bracket 423, and the interfacial adhesion may be enhanced by chemical bonding, such as covalent bonding or hydrogen bonding, with the insulating member 425 made of the polymer resin; physical interaction, such as mechanical bonding or electrostatic attraction; or surface energy affinity for the polar functional groups.

Furthermore, the one or more nanopores may be provided in the form of a plurality of pores on the surface of the terminal 421 or the bracket 423, and the interfacial adhesion may be improved by insertion of the insulating member 425 into the microunevenness by the nanopores or increasing the surface area.

The functional group may include at least one or more of a hydroxyl group (-OH), an amine group (-NH₂), and an epoxy group (-C-O-C-).

The surface treatment may include a first to third surface treatment.

In the case that the functional group is a hydroxyl group, the functional layer 421a may be provided by a first surface treatment.

The first surface treatment may include forming a chromium film using chromium (Cr) on the surface of the terminal 421 or the bracket 423, and then coating it with a binder to form a binder coating layer. Specifically, the functional layer 421a may include a chromium film formed by the first surface treatment and a binder coating layer.

The chromium film may include chromium (III) hydroxide (Cr(OH)₃) or chromium oxide (Cr₂O₃). The chromium (III) hydroxide (Cr(OH) ₃) may be formed by impregnating the terminal 421 or the bracket 423 in an aqueous solution including chromium (Cr) and controlling the pH. The chromium oxide (Cr₂O₃) may be formed by electrochemical anodization of the terminal 421 or the bracket 423.

The terminal 421 or the bracket 423 having the chromium film may be coated with a binder to form a binder coating layer. The binder may include a polymer having hydroxyl groups. The binder may include polyvinyl alcohol (PVA), polyurethane, polyethylene glycol (PEG), or the like.

Specifically, the first surface treatment may be provided in the following manner.

After performing electrolytic degreasing on the terminal 421 or the bracket 423, a first washing may be performed. The chrome film may be formed on the terminal 421 or the bracket 423 after the first washing is completed, and a second washing may be performed. The binder may be coated on the terminal 421 or the bracket 423 with the second washing completed to form a binder coating layer and then dried after undergoing a third washing.

After the first surface treatment is completed, the terminal 421 or the bracket 423 having the chrome film and binder coating layer may be manufactured into a terminal member 420 by insert molding with a polymer resin.

The terminal 421 or the bracket 423 having the chromium film and binder coating layer may be manufactured into the terminal member 420 via insert molding by placing it in a mold for insert molding and then injecting the activated polymer resin alone or a mixture of the polymer resin and the activated polymer resin into the mold for insert molding. The polymer resin or the activated polymer resin may be interposed between the terminal 421 and bracket 423 by insert molding to form an insulating member 425.

The activated polymer resin may be provided by activating the polymer resin. The polymer resin may include polypropylene (PP), and the activated polymer resin may include maleic anhydride grafted polypropylene (PP-g-MA) prepared by adding maleic anhydride to polypropylene (PP).

In the terminal member 420, the chromium film and the binder coating layer are formed on the terminal 421 or the bracket 423 by the first surface treatment, and hydroxyl groups (-OH) included in the binder coating layer may bind with the maleic anhydride grafted polypropylene (PP-g-MA) to derive high binding force.

When the functional group is an amine group, the functional layer 421a may be provided by a second surface treatment.

The second surface treatment may include pretreating a surface of the terminal 421 or the bracket 423 with a pH control solution, followed by treatment with a first silane coupling agent. Specifically, the functional layer 421a may include amine groups formed by the second surface treatment.

The pretreating may include impregnating the terminal 421 or the bracket 423 in the pH control solution. The pH control solution may involve treatment of an acidic solution or a basic solution.

The terminal 421 or the bracket 423 with the pretreatment completed may be coated with a silane coupling agent. The silane coupling agent may include an amino-based silane. The amino-based silane may include γ-aminopropyltrimethoxysilane, γ-aminopropyltriethoxysilane, γ-aminopropyltrialkoxy silane, or the like.

In particular, the second surface treatment may be provided in the following manner.

After performing electrolytic degreasing on the terminal 421 or the bracket 423, a first washing may be performed. After performing pretreatment with the acidic or basic solution on the terminal 421 or the bracket 423 with the first washing completed, coating with a first silane coupling agent may be followed. The terminal 421 or the bracket 423 coated with the first silane coupling agent may be dried after a second washing.

The first silane coupling agent may be used with dilution with ethanol and water. The first silane coupling agent may be utilized with dilution of 1 wt% to 2 wt% with ethanol and water.

After the second surface treatment is completed, the terminal 421 or the bracket 423 with a first silane coating layer formed by the first silane coupling agent may be manufactured into a terminal member 420 by insert molding with a polymer resin.

The terminal 421 or the bracket 423 having the first silane coating layer formed by the first silane coupling agent may be manufactured into the terminal member via insert molding by inserting into a mold for insert molding and injecting an activated polymer resin alone prepared by activating a polymer resin, or a mixture of the activated polymer resin and a polymer resin into the mold for insert molding. The polymer resin or the activated polymer resin may be interposed between the terminal 421 and bracket 423 by insert molding to be provided as an insulating member 425.

The activated polymer resin may be provided by introducing a carboxyl group (-COOH) into the polymer resin. The activated polymer resin may be prepared by copolymerizing the polymer resin with a monomer having a carboxyl group, or undergoing treatment of the polymer resin with an oxidizing solution of a strong acid or peroxide, plasma treatment, UV/ozone treatment, or the like.

The polymer resin may further include a filler. The filler may include any one or more of glass fiber, carbon fiber, and aramid fiber.

In the terminal member 420, by the second surface treatment, a first silane coating layer is formed on the terminal 421 or the bracket 423, wherein the amine groups (-NH₂) included in the first silane coating layer may exhibit high adhesion through amide bonds (-CO-NH-) with carboxyl groups provided by the activated polymer resin.

Alternatively, the polymer resin may be mixed with a filler in which carboxyl groups are introduced instead of the activated polymer resin and may be injected into a mold for insert molding. The filler with the carboxyl group introduced may be prepared by surface treatment with a carboxyl group derivative. The carboxyl groups provided by the carboxyl group-introduced filler may have the same or similar function as the carboxyl groups of the activated polymer resin.

In the case that the functional group is an epoxy group, the functional layer 421a may be prepared via a third surface treatment.

The third surface treatment may include pretreating the surface of the terminal 421 or the bracket 423 with a pH control solution, followed by treatment with a second silane coupling agent. Specifically, the functional layer 421a may include an epoxy group formed by the third surface treatment.

The third surface treatment may be performed in the same manner as the second surface treatment, but a second silane coupling agent may be utilized in place of the first silane coupling agent. The second silane coupling agent may include γ-glycidoxypropyltrimethoxysilane (GPTMS).

By the third surface treatment, the terminal 421 or the bracket 423 may include a second silane coating layer formed by coating with the second silane coupling agent. The second silane coating layer may provide an epoxy group.

In the terminal member 420, the terminal 421 or the bracket 423 may have a second silane coating layer formed by the third surface treatment, and the epoxy group (-C-O-C-) included in the second silane coating layer may bond with carboxyl groups (-COO-CH₂-CHOH-) provided in the activated polymer resin, thereby exhibiting high binding force.

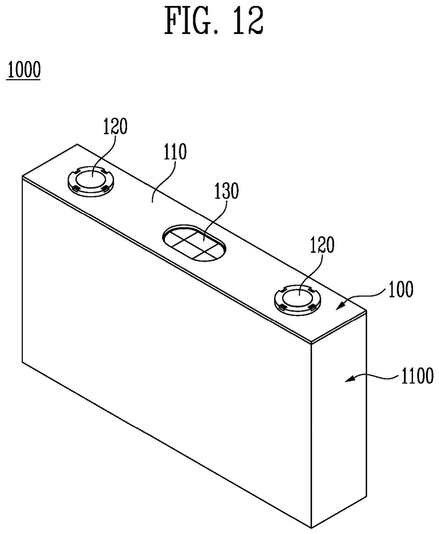

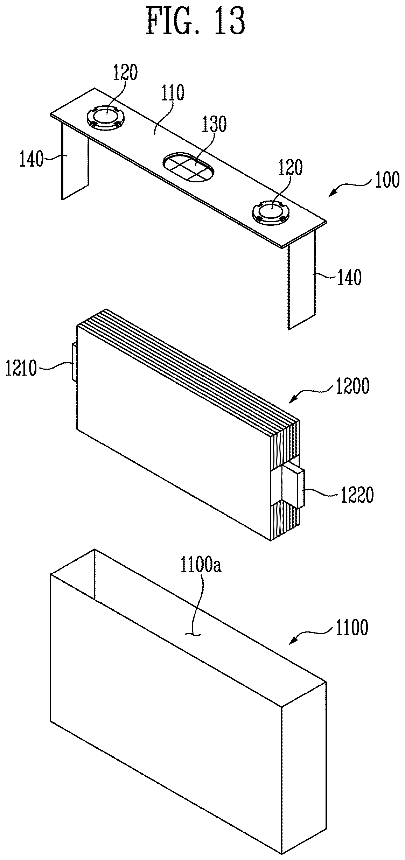

Fig. 12 is a diagram illustrating a secondary battery according to another embodiment of the present disclosure. Fig. 13 is an exploded view of Fig. 12.

Referring to Figs. 12 and 13, a cap assembly 100 according to an embodiment of the present disclosure may be assembled with a case 1100 to form a secondary battery 1000.

The secondary battery 1000 may include: an electrode assembly 1200 having one or more tabs 1210, 1220; a current collector 140 connected with the tabs 1210, 1220 of the electrode assembly 1200; a cap assembly 100 including a terminal member 120 connected with the current collector 140; and a case 1100 housing the electrode assembly 1200 and having an open surface.

The case 1100 may have a receiving space 1100a therein, and the electrode assembly 1200 may be housed within the receiving space 1100a. The electrode assembly 1200 may include a negative electrode and a positive electrode, and the tabs 1210, 1220 may include a negative electrode tab 1210 in connection with the negative electrode and a positive electrode tab 1220 in connection with the positive electrode.

The cap assembly 100 may be configured to cover an open surface of the case 1100. Specifically, when the case 1100 has one open surface, the cap assembly 100 may be provided in a single piece, and when the case 1100 has two open surfaces, two cap assemblies 100 may be provided.

The terminal member 120 may include a terminal, a bracket, and an insulating member, and may be integrally formed by insert molding. The cap assembly 100 may further include a cap plate 110 in the form of a plate provided in a shape corresponding to the open surface of the case 1100, a vent member 130 provided in the cap plate 110, and a current collector 140 connected to the terminal member 120 at the lower side of the cap plate 110.

The terminal member 120 may function as a negative electrode terminal when the current collector 140 in connection with the terminal member 120 is connected with the negative electrode tab 1210, and when the positive electrode tab 1220 is connected with the negative electrode tab 1210, terminal member 120 may function as a positive electrode terminal.

The current collector 140 electrically connected with the negative electrode tab 1210 may be connected with the terminal member 120 such that the terminal member 120 may function as a negative electrode terminal, and when the current collector 140 is electrically connected with the positive electrode tab 1220, the terminal member 120 may function as a positive electrode terminal.

The terminal 121 may be provided in a cylindrical shape having a first height h1, and the bracket 123 may be provided in as a hollow cylinder having a second height h2 less than the first height h1, with a passage formed therein (see Fig. 5).

The insulating member 125 may include an inner support 125a provided between the outer surface of the terminal 121 and the inner surface of the bracket 123, an outer support 125b covering at least a portion of the outer surface of the bracket 123, and an extension 125c connecting the inner support 125a and an end the outer support 125b, wherein at least a portion of the bracket 123 may be inserted into a space formed by the inner support 125a, the outer support 125b and the extension 125c (see Fig. 5).

The bracket 123 is spaced apart from the terminal 121 by the insulating member 125, such that the bracket 123 and the terminal 121 may be electrically insulated. Furthermore, in the insulating member 125, by inserting the bracket 123 into the space formed by the inner support 125a, the outer support 125b, and the extension 125c, interference that may occur in the electrical connection of the terminal 121 by the bracket 123 may be prevented, and the terminal 121 may be stably fixed to the cap plate 110 by the bracket 123 (see Fig. 5).

Further, the inner support 125a may have a third height h3, and the outer support 125b may have a fourth height h4, which is less than the third height h3. The fourth height h4 of the outer support 125b may be less than the second height h2 of the bracket 123, the inner surface of the bracket 123 may come in full contact with the inner support 125a of the insulating member 125, but the outer surface of the bracket 123 may include an exposed surface that is in contact with the outer support 125b of the insulating member 125 with at least a portion exposed. The exposed surface of the bracket 123 may be welded with the cap plate 110, and the second end of the outer support 125b of the insulating member 125 may be seated on a first surface of the cap plate 110 (see Fig. 5).

By arranging the terminals, brackets and insulating members constituting the terminal member 120 to have the aforementioned height relationship, the strength of the terminal member 120, which is integrally formed, may be improved, and the leak path of the secondary battery through the terminal member 120 may be effectively eliminated. Furthermore, in the terminal member 120, the terminal and bracket are provided with screw threads, respectively, and the contact area with the insulating member may be increased by the screw threads to further improve the airtightness of the secondary battery.

In Figs. 12 and 13, the case 1100 is shown as having an open surface, but the case may be open at both sides and is not limited thereto.

Alternatively, when the case is open at both sides, the negative electrode tab of the electrode assembly may be provided on a first side of the case, and the positive electrode tab of the electrode assembly may be provided on a second side of the case. In this case, the cap assembly may be provided with one terminal member to be connected to the first side and the second side of the case, respectively.

In the secondary battery 1000 according to the present disclosure, at least some of the terminals 121 and the brackets 123 including the terminal members 120 may further include a functional layer.

The functional layer may be provided by surface treatment of at least one or more of the terminals 121 and the brackets 123 prior to insert molding. The functional layer may include at least one or more of: one or more functional groups; and one or more nanopores.

In an embodiment of the present disclosure, the terminal 121 and the bracket 123 may be made of metal, and the insulating member 125 interposed between the terminal 121 and the bracket 123 may be made of a polymer resin. By further including the functional layer on at least one or more of the terminal 121 and the bracket 123, it is possible to further improve the adhesion of the insulating member 125 made of heterogenous materials, thereby improving airtightness of the secondary battery 1000.

It is understood by those skilled in the art that the plurality of exemplary embodiments described above are specific examples of the following aspects.

Aspect 1. A cap assembly for a secondary battery, comprising: a cap plate provided with one or more openings; and one or more terminal members inserted into the opening and exposed through a first surface of the cap plate, wherein the terminal member includes a terminal, a bracket, and an insulating member and is integrally formed by insert molding.

Aspect 2. The cap assembly according to aspect 1, wherein the terminal member has any one or more of a circular and an elliptical cross-section, optionally wherein the terminal has a cylindrical shape, wherein the bracket has a hollow cylindrical shape with a passage formed therein, and wherein the insulating member is interposed between the terminal and the bracket.

Aspect 3. The cap assembly according to aspect 1 or 2, wherein a first surface of the terminal member is configured to be exposed to the first surface of the cap plate, wherein the first surface of the terminal member is provided with the terminal and the insulating member, wherein a second surface of the terminal member is provided with the terminal, the bracket, and the insulating member, and wherein the insulating member includes one or more grooves, and the grooves are provided on the first surface of the terminal member.

Aspect 4. The cap assembly according to aspect 3, wherein the insulating member includes an inwardly recessed seating portion along an edge of the insulating member, and wherein at least a portion of the bracket is inserted into the seating portion.

Aspect 5. The cap assembly according to aspect 3, wherein any one or more of an outer surface of the terminal and an inner circumferential surface of the bracket include surface irregularities, optionally wherein any one or more of the outer surface of the terminal and the inner circumferential surface of the bracket include screw threads.

Aspect 6. The cap assembly according to any one of the previous aspects, wherein the terminal is provided in a cylindrical shape having a first height, wherein the bracket is provided in a hollow cylindrical shape having a passage formed therein with a second height less than the first height, wherein the insulating member includes: an inner support provided between an outer surface of the terminal and an inner surface of the bracket; an outer support covering at least a portion of the outer surface of the bracket; and an extension connecting the inner support and a first end of the outer support, and wherein at least a portion of the bracket is inserted into a space formed by the inner support, the outer support, and the extension.

Aspect 7. The cap assembly according to aspect 6, wherein the inner support has a third height, and the outer support has a fourth height less than the third height, wherein the fourth height of the outer support is less than the second height of the bracket, and wherein the inner surface of the bracket is configured to be in full contact with the inner support of the insulating member, whereas the outer surface of the bracket includes an exposed surface that is in contact with the outer support of the insulating member with at least a portion exposed.

Aspect 8. The cap assembly according to aspect 7, wherein the exposed surface of the bracket is welded with the cap plate, and wherein a second end of the outer support of the insulating member is seated on the first surface of the cap plate, optionally wherein the inner support, the outer support, and the extension have ∩-shape longitudinal sections, wherein the second end of the outer support further includes a friction surface.

Aspect 9. The cap assembly according to any one of the previous aspects, further comprising: a vent member provided on the cap plate; one or more current collectors connected with the terminal member on a second surface of the cap plate; and an insulating sheet interposed between the current collector and the cap plate, wherein the cap plate further includes a vent hole in which the vent member is provided, and wherein the first surface of the terminal member is exposed through the first surface of the cap plate, and the second surface of the terminal member is connected with the current collector.

**Aspect** 10. The cap assembly according to any one of the previous aspects, wherein at least some of the terminal and the bracket further include a functional layer.

Aspect 11. The cap assembly according to aspect 10, wherein the functional layer is provided by surface treating at least one or more of the terminal and the bracket prior to insert molding, and wherein the functional layer includes at least one or more of: one or more functional groups; and one or more nanopores, optionally wherein the functional group may include at least one or more of a hydroxyl group (-OH), an amine group (-NH₂), and an epoxy group (-C-O-C-).

Aspect 12. A secondary battery comprising: an electrode assembly having one or more tabs; a current collector connected with the tab of the electrode assembly; a cap assembly including a terminal member connected with the current collector; and a case housing the electrode assembly and including an open surface, wherein the cap assembly is configured to cover the open surface of the case, and wherein the terminal member includes a terminal, a bracket, and an insulating member and is integrally formed by insert molding.

Aspect 13. The secondary battery according to aspect 12, wherein the terminal is provided in a cylindrical shape having a first height, wherein the bracket is provided in a hollow cylindrical shape having a passage formed therein with a second height less than the first height, wherein the insulating member includes: an inner support provided between an outer surface of the terminal and an inner surface of the bracket; an outer support covering at least a portion of an outer surface of the bracket; and an extension connecting the inner support and a first end of the outer support, and wherein at least a portion of the bracket is inserted into a space formed by the inner support, the outer support, and the extension.

Aspect 14. The secondary battery according to aspect 12, wherein the inner support has a third height, and the outer support has a fourth height less than the third height, wherein the fourth height of the outer support is less than the second height of the bracket, wherein the inner surface of the bracket is configured to be in full contact with the inner support of the insulating member, whereas the outer surface of the bracket includes an exposed surface that is in contact with the outer support of the insulating member with at least a portion exposed, wherein the exposed surface of the bracket is welded with the cap plate, and wherein a second end of the outer support of the insulating member is seated on a first surface of the cap plate.

Aspect 15. The secondary battery according to aspect 14, wherein at least some of the terminal and the bracket further include a functional layer, optionally wherein the functional layer is provided by surface treating at least one or more of the terminal and the bracket prior to insert molding, and wherein the functional layer includes at least one or more of: one or more functional groups; and one or more nanopores.

Those of ordinary skill in the art to which the present disclosure pertains will understand that the present disclosure may be practiced in other specific forms without altering its technical ideas or essential features. Therefore, it should be understood in all respects that embodiments described above are exemplary and not limiting. The scope of the present disclosure is indicated by the scope of the following patent claims rather than by the detailed description above, and the meaning and scope of the claims and all modifications or variations derived from the equivalents thereof are to be construed to fall within the scope of the present disclosure.

## Claims

1. A cap assembly for a secondary battery, comprising:
a cap plate provided with one or more openings; and
one or more terminal members inserted into the opening and exposed through a first surface of the cap plate,
wherein the terminal member includes a terminal, a bracket, and an insulating member and is integrally formed by insert molding.

2. The cap assembly according to claim 1, wherein the terminal member has any one or more of a circular and an elliptical cross-section,
optionally wherein the terminal has a cylindrical shape, the bracket has a hollow cylindrical shape with a passage formed therein, and the insulating member is interposed between the terminal and the bracket.

3. The cap assembly according to claim 1 or 2, wherein a first surface of the terminal member is configured to be exposed to the first surface of the cap plate,
wherein the first surface of the terminal member is provided with the terminal and the insulating member,
wherein a second surface of the terminal member is provided with the terminal, the bracket, and the insulating member, and
wherein the insulating member includes one or more grooves, and the grooves are provided on the first surface of the terminal member.

4. The cap assembly according to claim 3, wherein the insulating member includes an inwardly recessed seating portion along an edge of the insulating member, and
wherein at least a portion of the bracket is inserted into the seating portion.

5. The cap assembly according to claim 3, wherein any one or more of an outer surface of the terminal and an inner circumferential surface of the bracket include surface irregularities,
optionally wherein any one or more of the outer surface of the terminal and the inner circumferential surface of the bracket include screw threads.

6. The cap assembly according to any one of the previous claims, wherein the terminal is provided in a cylindrical shape having a first height,
wherein the bracket is provided in a hollow cylindrical shape having a passage formed therein with a second height less than the first height,
wherein the insulating member includes: an inner support provided between an outer surface of the terminal and an inner surface of the bracket; an outer support covering at least a portion of the outer surface of the bracket; and an extension connecting the inner support and a first end of the outer support, and
wherein at least a portion of the bracket is inserted into a space formed by the inner support, the outer support, and the extension.

7. The cap assembly according to claim 6, wherein the inner support has a third height, and the outer support has a fourth height less than the third height,
wherein the fourth height of the outer support is less than the second height of the bracket, and
wherein the inner surface of the bracket is configured to be in full contact with the inner support of the insulating member, whereas the outer surface of the bracket includes an exposed surface that is in contact with the outer support of the insulating member with at least a portion exposed.

8. The cap assembly according to claim 7, wherein the exposed surface of the bracket is welded with the cap plate, and
wherein a second end of the outer support of the insulating member is seated on the first surface of the cap plate,
optionally wherein the inner support, the outer support, and the extension have ∩-shape longitudinal sections, the second end of the outer support further includes a friction surface.

9. The cap assembly according to any one of the previous claims, further comprising:
a vent member provided on the cap plate;
one or more current collectors connected with the terminal member on a second surface of the cap plate; and
an insulating sheet interposed between the current collector and the cap plate,
wherein the cap plate further includes a vent hole in which the vent member is provided, and
wherein the first surface of the terminal member is exposed through the first surface of the cap plate, and the second surface of the terminal member is connected with the current collector.

10. The cap assembly according to any one of the previous claims, wherein at least some of the terminal and the bracket further include a functional layer.

11. The cap assembly according to claim 10, wherein the functional layer is provided by surface treating at least one or more of the terminal and the bracket prior to insert molding, and
wherein the functional layer includes at least one or more of: one or more functional groups; and one or more nanopores,
optionally wherein the functional group may include at least one or more of a hydroxyl group (-OH), an amine group (-NH₂), and an epoxy group (-C-O-C-).

12. A secondary battery comprising:
an electrode assembly having one or more tabs;
a current collector connected with the tab of the electrode assembly;
a cap assembly including a terminal member connected with the current collector; and
a case housing the electrode assembly and including an open surface,
wherein the cap assembly is configured to cover the open surface of the case, and
wherein the terminal member includes a terminal, a bracket, and an insulating member and is integrally formed by insert molding.

13. The secondary battery according to claim 12, wherein the terminal is provided in a cylindrical shape having a first height,
wherein the bracket is provided in a hollow cylindrical shape having a passage formed therein with a second height less than the first height,
wherein the insulating member includes: an inner support provided between an outer surface of the terminal and an inner surface of the bracket; an outer support covering at least a portion of an outer surface of the bracket; and an extension connecting the inner support and a first end of the outer support, and
wherein at least a portion of the bracket is inserted into a space formed by the inner support, the outer support, and the extension.

14. The secondary battery according to claim 12, wherein the inner support has a third height, and the outer support has a fourth height less than the third height,
wherein the fourth height of the outer support is less than the second height of the bracket,
wherein the inner surface of the bracket is configured to be in full contact with the inner support of the insulating member, whereas the outer surface of the bracket includes an exposed surface that is in contact with the outer support of the insulating member with at least a portion exposed,
wherein the exposed surface of the bracket is welded with the cap plate, and
wherein a second end of the outer support of the insulating member is seated on a first surface of the cap plate.

15. The secondary battery according to claim 14, wherein at least some of the terminal and the bracket further include a functional layer,
optionally wherein the functional layer is provided by surface treating at least one or more of the terminal and the bracket prior to insert molding, and
wherein the functional layer includes at least one or more of: one or more functional groups; and one or more nanopores.
